# EUROPÄISCHE PATENTSCHRIFT

(11) **EP 2 794 207 B1**
(45) Veröffentlichungstag und Bekanntmachung des Hinweises auf die Patenterteilung: **10.01.2018**
(21) Anmeldenummer: 12780750.1
(22) Anmeldetag: 05.11.2012
(51) Int. Cl.: B27B 19/00, B23D 61/00

(54) **DREHOSZILLATIONSTRENNWERKZEUG FÜR EINE WERKZEUGMASCHINE**
ROTARY OSCILLATION CUTTING TOOL FOR A MACHINE TOOL
OUTIL DE COUPE OSCILLANT-ROTATIF POUR MACHINE OUTIL

(30) Priorität: 20.12.2011 DE 102011089129; 27.03.2012 DE 102012204864
(43) Veröffentlichungstag der Anmeldung: 29.10.2014
(73) Patentinhaber: Robert Bosch GmbH, 70442 Stuttgart (DE)
(72) Erfinder: DOST, Hagen, Chicago, Illinois 60625 (US); BOZIC, Milan, CH-4500 Solothurn (CH)
(86) Internationale Anmeldenummer: PCT/EP2012/071779
(87) Internationale Veröffentlichungsnummer: WO 2013/091966

(56) Entgegenhaltungen:
- WO-A1-89/09028
- WO-A2-2007/041027
- DE-A1- 10 231 393
- DE-A1- 10 325 392
- DE-A1-102004 050 799
- DE-A1-102008 001 234
- DE-C1- 4 036 904
- DE-U1-202011 050 511
- US-A- 4 036 236
- US-A- 4 617 930
- US-A- 5 735 866

## Beschreibung

Die Erfindung bezieht sich auf ein Drehoszillationstrennwerkzeug, insbesondere ein Drehoszillationssägeblatt, für eine Werkzeugmaschine nach dem Oberbegriff des Anspruches 1. Ein solches Drehoszillationstrennwerkzeug ist offenbart in DE102008001234.

### Stand der Technik

Es sind schon eine Vielzahl unterschiedlicher Drehoszillationstrennwerkzeuge bekannt. Unter einem Drehoszillationstrennwerkzeug wird dabei insbesondere ein Werkzeug mit einem Stammblatt, einer Arbeitskante und mit einem mit dem Stammblatt verbundenen Halterungsteil zur Halterung an einer vorzusgweise drehoszillierend angetriebenen Welle der Werkzeugmaschine verstanden. Die Arbeitskante ist dabei vorzugsweise als Schneidkante mit bspw. Schneidzähnen, - partiklen und/oder -körpern versehen.

In der DE 203 08 797 U1 wird ein Sägeblatt für eine Säge mit drehoszillierender Antriebsbewegung beschrieben. Das Sägeblatt weist ein annähernd rechteckförmiges Stammblatt mit einer Schneidkante auf sowie ein einteilig mit dem Stammblatt ausgebildetes Halterungsteil mit einer Ausnehmung zur Aufnahme der Werkzeugwelle der Werkzeugmaschine. Die Schneidkante ist geradlinig ausgeführt und mit Schneidzähnen versehen.

Derartige Sägeblätter unterliegen im Betrieb hohen Belastungen. Bedingt durch die hohe Oszillationsfrequenz können bei der Werkstückbearbeitung unerwünschte Vibrationen bzw. ein Flattern im Sägeblatt entstehen, was eine präzise Werkstückbearbeitung beeinträchtigt. Das Vibrationsverhalten kann durch eine größere Dicke des Sägeblatts verbessert werden, was jedoch zu einem höheren Materialeinsatz bei der Herstellung des Sägeblatts führt und höhere Antriebskräfte erfordert.

### Offenbarung der Erfindung

Der Erfindung liegt die Aufgabe zugrunde, mit einfachen konstruktiven Maßnahmen das Vibrationsverhalten eines Drehoszillationssägeblatts zu verbessern.

Diese Aufgabe wird erfindungsgemäß mit den Merkmalen des Anspruches 1 gelöst. Die Unteransprüche geben zweckmäßige Weiterbildungen an.

Bei dem erfindungsgemäßen Drehoszillationstrennwerkzeug handelt es sich vorzugsweise um ein Tauchsägeblatt, das in Werkzeugmaschinen, vorzugsweise in Handwerkzeugmaschinen mit Drehoszillationsantrieb eingesetzt wird. Das Drehoszillationstrennwerkzeug weist ein Stammblatt mit einer Arbeitskante, vorzugsweise eine Schneidkante, welche mit Schneidzähnen versehen ist, auf, sowie ein Halterungsteil zur Halterung an der Werkzeugwelle der Handwerkzeugmaschine. Das Stammblatt und das Halterungsteil sind miteinander verbunden, wobei sowohl einteilige Ausführungen von Stammblatt und Halterungsteil als auch separate Ausführungen in Betracht kommen, bei denen das Stammblatt und das Halterungsteil jeweils als eigenständige Bauteile ausgebildet, jedoch fest miteinander verbunden sind.

Das Drehoszillationstrennwerkzeug weist zur Steifigkeitsverbesserung im Halterungsteil ein Verstärkungselement auf, welches einteilig mit dem Halterungsteil ausgebildet ist. Das Verstärkungselement ist unmittelbar oder mit nur geringem Abstand benachbart zum Stammblatt angeordnet. Das Verstärkungselement erhöht in signifikanter Weise die Steifigkeit des Halterungsteils und damit auch des gesamten Sägeblattes und führt zu einer Verbesserung des Vibrationsverhaltens. Es wird insbesondere ein Flattern des Drehoszillationstrennwerkzeugs, insbesondere des Stammblattes und der Arbeitskante verhindert oder zumindest reduziert, wodurch sich auch die Bearbeitungsqualität verbessert. Die Steifigkeitserhöhung kann dabei über eine Veränderung der Form des Halterungsteils erzielt werden, eine Erhöhung der Materialdichte ist dagegen nicht erforderlich, so dass auch das Trägheitsmoment trotz der Steifigkeitsverbesserung nicht oder nur geringfügig erhöht wird und dementsprechend auch keine erhöhte Antriebsleistung für die Erzeugung der gewünschten Drehoszillationsschwingungen erforderlich ist. Die Gesamtstruktur des Halterungsteils wird gefestigt und stabilisiert, was sich durch die Nähe des Verstärkungselementes zum Stammblatt auch auf das gesamte Drehoszillationstrennwerkzeug auswirkt.

Grundsätzlich ist es nicht erforderlich, auch das Stammblatt mit derartigen Verstärkungselementen zu versehen, was den Vorteil hat, dass ebene Stammblätter ohne überstehende Bauelemente verwendet werden können. Gemäß einer alternativen Ausführung können jedoch auch die Stammblätter mit Verstärkungselementen versehen sein, die einteilig mit dem Stammblatt ausgebildet sind.

Es kommen verschiedene Möglichkeiten für die Ausführung des Verstärkungselementes in Betracht. So kann es beispielsweise zweckmäßig sein, das Verstärkungselement als eine Verformung im Halterungsteil auszuführen, die zu der gewünschten Steifigkeitserhöhung führt. Die Verformung erfolgt beispielsweise durch Prägen, in Betracht kommt aber auch Stanzen oder Tiefziehen von Sicken bzw. Falzen oder verschiedenartige Verbiegungen, jeweils in dem zum Stammblatt benachbarten Bereich des Halterungsteils. Derartige Verformungen haben den Vorteil, dass keine Halterungsteile aus einem Rohmaterial mit veränderter Dicke eingesetzt werden müssen. Es genügt vielmehr, Standard-Halterungsteile zu verwenden und die Steifigkeitserhöhung durch die Verformung zu bewirken. Aufgrund der Einteiligkeit des Versteifungselementes mit dem Halterungsteil entfällt die Notwendigkeit, zusätzliche, separate Bauteile am Halterungsteil anzuordnen.

Das im Wege der Verformung erzeugte Verstärkungselement kann erhaben ausgeführt sein und sich über die Oberfläche des Halterungsteils erheben, insbesondere über die Oberseite, wobei grundsätzlich auch eine Anordnung an der Unterseite in Betracht kommt, welche bei regulärem Gebrauch der Werkzeugmaschine dem Werkstück zugewandt ist. Das Verstärkungselement kann in einem mittleren Bereich des Halterungsteils angeordnet sein, vorzugsweise mit seitlichem Abstand zu den Seitenkanten. Möglich ist aber auch eine Ausführung als eine im Bereich der Seitenkante ausgeführte Wandung, welche gegenüber der Ebene des Halterungsteils winklig ausgerichtet ist und beispielsweise einen 90°-Winkel oder gegebenenfalls auch einen hiervon abweichenden, insbesondere größer als 90° betragenden Winkel einnimmt. Vorteilhafterweise sind derartige Wandungen als Verstärkungselemente symmetrisch an beiden Seitenkanten des Halterungsteils in dem zum Stammblatt benachbarten Abschnitt angeordnet. Die Wandung kann an sich geradlinig ausgeführt sein oder bezogen auf ihre Länge und/oder ihre Höhe in verschiedene Abschnitte unterteilt sein, welche zueinander winklig angeordnet oder gebogen ausgeführt sind. Des Weiteren kann es zweckmäßig sein, im Bereich der freien Stirnseite der Wandung einen umgebogenen Kragen vorzusehen, der einteilig mit der Wandung ausgebildet ist, wobei der Kragen zu einer zusätzlichen Steifigkeitsverbesserung führt.

Eine alternative aber auch ergänzende Maßnahme zur Ausbildung eines Verstärkungselements kann dadurch erreicht werden, dass das Verstärkungselement als eine Härtemodulationszone im Halterungsteil ausgebildet ist, die mindestens zwei zu einander benachbarte Teilbereiche mit von einander unterschiedlichen Härtegraden im Halterungsteil und/oder im Stammblatt aufweist. Unter einer Härtemodulationszone wird dabei insbesondere ein Bereich des Halterungsteils und/oder des Stammblatts verstanden, der in mindestens einer Erstreckungsrichtung betrachtet Teilbereiche unterschiedlicher Härtegrade oder Härtezonen ausweist. Die unterschiedlichen Härtegrade oder Härtezonen können dabei durch:
- die Verwendung oder Kombination verschiedener Materialien und/oder Legierungszusammensetzungen;
- und/oder spez. thermische Behandlung lokaler Zonen;
- und/oder spez. chemische Behandlung (Beschichtungen) lokaler Zonen
- und/oder Aufdicken (bspw. Aufbringen eines Streifens) mit gleichem oder unterschiedlichem Material
herbeigeführt werden. Sind diese unterschiedlichen Härtegrade oder Härtezonen über einen gesamten Aufnahmebereich oder aber Teilebereiche von Halterungsteil und/oder Stammblatt - bevorzugt in einem Verbindungsbereich zwischen einer oberer zu einer unterer Ebene bei einem gekörpften Drehoszillationstrennwerkzeug - wird das erfindungsgemäße Drehoszillationstrennwerkzeug als ganzes versteift, wodurch einzelne, exponiertere Bereiche - beispielsweise die Arbeitskante - ungleich schwerer zum Schwingen angeregt werden können.

In einer bevorzugten Ausführung liegt mindestens eine zweite Härte der Härtemodullationszone über einer durchschnittlichen Härte des Halterungsteils. Insbesondere liegt die zweite Härte dabei min. 10%, vorzugsweise min. 20% über der Standardhärte. Eine bevorzugte Standardhärte liegt dabei bei 48 ±3 HRC.

In einer bevorzugten Ausführung einer Härtemodulationszone kann eine komplette oder teilweise Randverhärtung des Wellenaufnahmeabschnitts, des Übergangsabschnitts und/oder des Verbindungsabschnitts, minimal jedoch einer seitlichen Kante einer Fläche des Übergangsabschnitts, wobei vorzugsweise eine leichte Überlappung zum Wellaufnahmeabschnitt und zum Verbindungsabschnitt vorgesehen ist. Eine derartige Ausführung führt zu einer vorteilhaften Versteifung eines Grundrahmens des Halterungsteils.

In einer anderen bevorzugten Ausführung einer Härtemodulationszone nur die komplette oder Teile einer Fläche des Übergangsabschnitts in einer zum Wellenaufnahmeabschnitt und zum Verbindungsabschnitt unterschiedlichen Härte ausgeführt sein. Dies kann zu einer vorteilhaften Versteifung einer Ebenenverbindung, insbesondere bei einer gekröpften Ausführung führen, welche die größten Torsions- und Biegebelastung aufnehmen muss.

In einer anderen bevorzugten Ausführung einer Härtemodulationszone können exponierte Eckpunkte (bspw. Rahmen, Diagonalen), welche sich über den Wellenaufnahmeabschnitt, den Übergangsabschnitt und/oder den Verbindungsabschnitt oder nur über eine Fläche des Übergangabschnitts erstrecken, durch das Vorsehen mindestens einer höheren Härte versteift werden. Auf diese Weise kann eine vorteilhafte Versteifung der kompletten Aufnahme durch Versteifung der Eckpunkte erreicht werden.

In einer weiteren bevorzugten Ausführung einer Härtemodulationszone kann diese als mindestens ein Streifen, welcher sich vorzugsweise in einer Längsachse des Drehoszillationstrennwerkzeugs und sich entweder über da im Wesentlichen gesamte Halterungsteil oder nur über Fläche des Übergangsabschnitts mit einer leichten Überlappung zu den angrenzenden Wellenaufnahmeabschnit und Verbindungsabschnitt erstreckt, mit mindestens einer höheren Härte ausgebildet werden. Dabei entsteht eine vorteilhafte Versteifung des Übergangsabschnitts als Stützbalken erricht werden.

Grundsätzlich genügt es, nur ein einziges Verstärkungselement am Halterungsteil vorzusehen. Gemäß einer alternativen Ausführung sind mindestens zwei, gegebenenfalls noch mehr Verstärkungselemente am Halterungsteil angeordnet, welche als Verformung, beispielsweise als Prägung oder als umgebogene Wandung oder in sonstiger Weise ausgebildet sein können. Insbesondere können die zwei oder mehreren Verstärkungselemente dabei vorteilhaft in jeder dem Fachmann sinnvoll erscheinende Kombination aus einer Verformung und/oder einer Härtemodulationszone im Halterungsteil gebildet sein.

Gemäß noch einer vorteilhaften Ausführung ist das Halterungsteil zumindest abschnittsweise - benachbart zu dem Stammblatt - als Hohlprofil ausgebildet. Insbesondere der Verbindungsbereich zwischen dem Halterungsteil und dem Stammblatt kann im Querschnitt rahmenförmig aufgebaut sein und einen Hohlraum einschließen. Gegebenenfalls ist das gesamte Halterungsteil als ein Hohlprofil ausgeführt.

Gemäß einer weiteren vorteilhaften Ausführung ist das Halterungsteil gekröpft ausgebildet und weist einen schräg verlaufenden Übergangsabschnitt auf, welcher einen Wellenaufnahmeabschnitt und einen hierzu parallel versetzten Verbindungsabschnitt im Halterungsteil verbindet, wobei der Wellenaufnahmeabschnitt zur Befestigung mit der Werkzeugwelle und der Verbindungsabschnitt zur Verbindung mit dem Stammblatt dient. Das Verstärkungselement bzw. die Verstärkungselemente sind vorzugsweise in dem Übergangsabschnitt des Halterungsteils und/oder benachbart zum Übergangsabschnitt angeordnet, sie können sich gegebenenfalls über die gesamte Länge des Übergangsabschnitts zwischen dem Wellenaufnahmeabschnitt und dem Verbindungsabschnitt erstrecken. In dem schräg verlaufenden Übergangsabschnitt entstehen bei der Werkstückbearbeitung zusätzliche Kräfte bzw. Momente, die durch die Steifigkeitserhöhung mittels der Verstärkungselemente besser aufgenommen werden können.

Weitere Vorteile und zweckmäßige Ausführungen sind den weiteren Ansprüchen, der Figurenbeschreibung und den Zeichnungen zu entnehmen. Es zeigen:
- Fig. 1: in perspektivischer Ansicht ein Drehoszillationstrennwerkzeug, das als Tauchsägeblatt ausgeführt ist und ein rechteckförmiges Stammblatt und ein Halterungsteil zur Befestigung an einer Werkzeugwelle aufweist, mit einem Verstärkungselement in einem schräg verlaufenden Übergangsabschnitt zwischen einem Wellenaufnahmeabschnitt und einem Verbindungsabschnitt am Halterungsteil,
- Fig. 2: ein Drehoszillationstrennwerkzeug mit einem durch Prägen im Übergangsabschnitt hergestellten Verstärkungselement,
- Fig. 3: ein Drehoszillationstrennwerkzeug mit zwei parallel angeordneten Verprägungen im Übergangsabschnitt,
- Fig. 4: ein Drehoszillationstrennwerkzeug mit einer einteilig ausgebildeten, seitlichen Wandung im Bereich des Übergangsabschnittes sowie des Wellenaufnah meabsch nittes,
- Fig. 5: ein weiteres Ausführungsbeispiel mit einer seitlichen Wandung am Übergangs- und Aufnahmeabschnitt, wobei die Wandung im Bereich ihrer Stirnseite einen umgebogenen Kragen aufweist,
- Fig. 6: ein ähnliches Ausführungsbeispiel wie Fig. 5, jedoch mit einer schräg gestellten Wandung am Übergangsabschnitt und am Wellenaufnahmeabschnitt,
- Fig. 7: ein Drehoszillationstrennwerkzeug mit einem ausgestanzten und verformten Verstärkungselement im Bereich des Übergangsabschnittes,
- Fig. 8: ein Drehoszillationstrennwerkzeug mit dem Übergangsabschnitt sowie dem Verbindungsabschnitt in Form eines Hohlprofils,
- Fig. 9: eine Ausführungsvariante des Drehoszillationstrennwerkzeugs mit dem Übergangs- und Verbindungsabschnitt als Hohlprofil.

In den Figuren sind gleiche Bauteile mit gleichen Bezugszeichen versehen.

In sämtlichen Figuren ist ein als Drehoszillations- oder Tauchsägeblatt für eine Werkzeugmaschine ausgeführtes Drehoszillationstrennwerkzeug dargestellt.

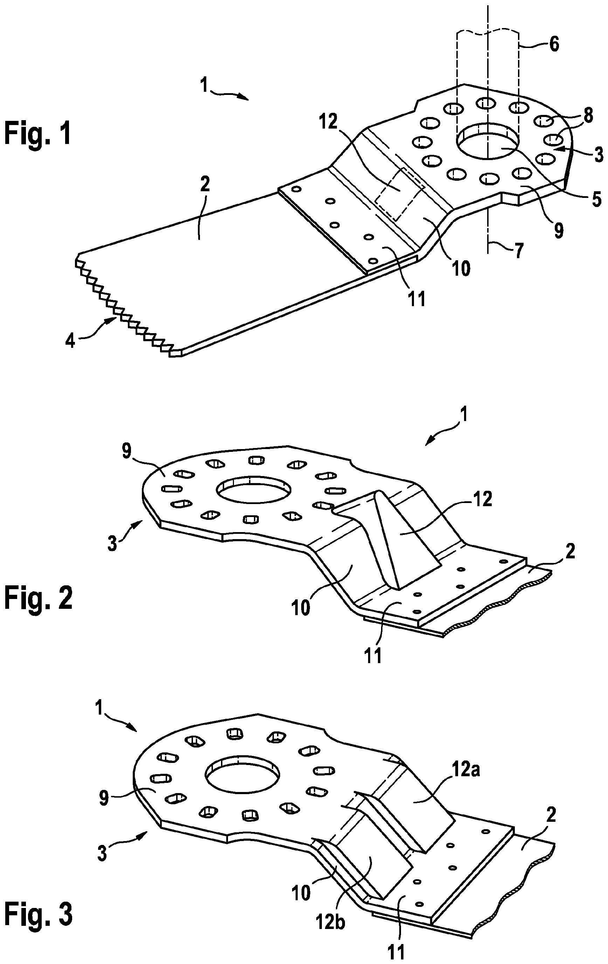

Das in Fig. 1 dargestellte Drehoszillationssägeblatt 1 umfasst ein zumindest annähernd rechteckförmiges oder kreissegmentförmiges Stammblatt 2 sowie ein mit dem Stammblatt 2 verbundenes, gekröpftes Halterungsteil 3. An der freien, dem Halterungsteil 3 abgewandten Stirnseite ist das Stammblatt 2 mit einer Schneidkante 4 mit Schneidzähnen versehen. Das Halterungsteil 3 umfasst einen Wellenaufnahmeabschnitt 9 mit einer Befestigungsaufnahme 5 zur Aufnahme der Werkzeugwelle 6 der Werkzeugmaschine, welche eine drehoszillierende Bewegung um die Drehachse 7 ausführt. Die Befestigung mit der Werkzeugwelle 6 erfolgt mittels Rastöffnungen 8, die ringförmig um die zentrale Befestigungsausnehmung 5 in dem Wellenaufnahmeabschnitt 9 eingebracht sind.

Das Halterungsteil 3 umfasst des Weiteren einen Übergangsabschnitt 10 sowie einen Verbindungsabschnitt 11, über den die Verbindung zu dem Stammblatt 2 erfolgt; Stammblatt 2 und Halterungsteil 3 sind als separate Bauteile ausgeführt, die jedoch fest miteinander verbunden sind. Der Wellenaufnahmeabschnitt 9 und der Verbindungsabschnitt 11 liegen parallel versetzt zueinander, die Höhendifferenz wird von dem schräg verlaufenden Übergangsabschnitt 10 überbrückt. Der Wellenaufnahmeabschnitt 9, der Übergangsabschnitt 10 und der Verbindungsabschnitt 1 sind einteilig ausgebildet.

In den Übergangsabschnitt 10 des Halterungsteils 3 ist ein Verstärkungselement 12 eingebracht, welches insbesondere im Wege einer Verformung des Materials im Übergangsabschnitt 10 ausgebildet ist und beispielsweise durch Stanzen oder Prägen erzeugt wird. Das Verstärkungselement 12 ist somit einteilig mit dem Übergangsabschnitt ausgebildet und dient zur Steifigkeitsverbesserung und damit einhergehend zu einer Reduzierung unerwünschter Schwingungen im Halterungsteil 3 sowie im Stammblatt 2 während der Werkstückbearbeitung.

Im Ausführungsbeispiel gemäß Fig. 2 ist das Verstärkungselement 12 durch Prägen im Bereich des Übergangsabschnittes 10 hergestellt. Das Verstärkungselement 12 weist eine dreieckförmige, nach oben spitz zulaufende Kontur auf und ist gegenüber der Ebene des Übergangsabschnittes 10 erhaben ausgeführt und überragt die Oberseite des Übergangsabschnittes 10. Das Verstärkungselement 12 befindet sich mittig bzw. symmetrisch im Übergangsabschnitt 10 mit Abstand zu beiden Seitenkanten.

Im Ausführungsbeispiel gemäß Fig. 3 sind zwei Verstärkungselemente 12a, 12b in den Übergangsabschnitt 10 des Halterungsteils 3 eingebracht. Die beiden Verstärkungselemente 12a, 12b sind ebenfalls durch Prägen hergestellt und gegenüber der Oberseite des Übergangsabschnittes 10 erhaben ausgebildet. Jedes Verstärkungselement 12 weist eine etwa rechteckförmige Kontur auf und erstreckt sich zwischen dem Wellenaufnahmeabschnitt 9 und dem Verbindungsabschnitt 11. Die beiden Verstärkungselemente 12a, 12b liegen parallel zueinander und weisen zueinander sowie zur jeweiligen Seitenkante einen Abstand auf.

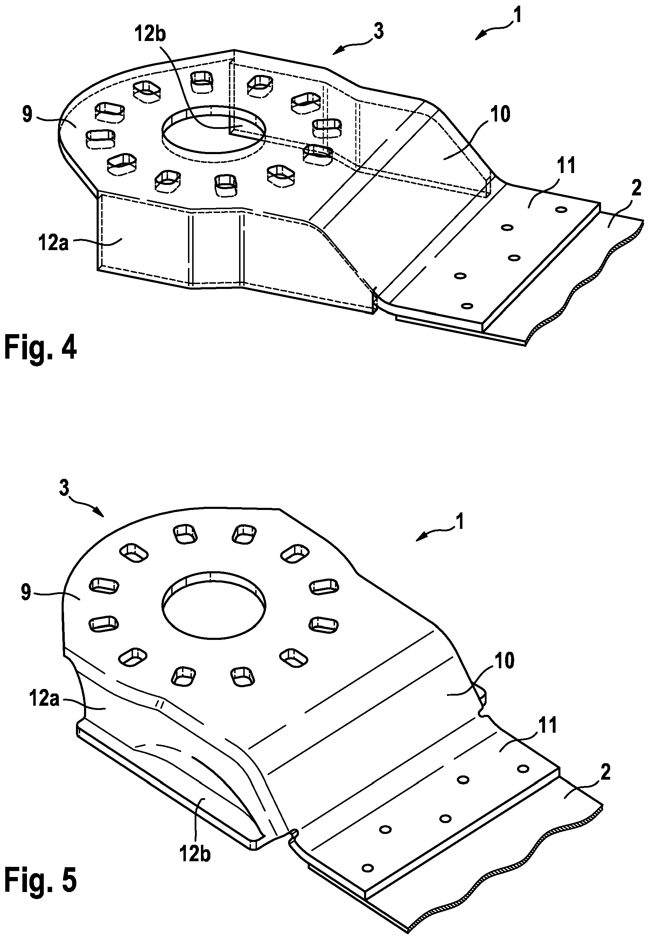

Im Ausführungsbeispiel gemäß Fig. 4 sind die Verstärkungselemente als Wandungen 12a, 12b im seitlichen Bereich des Halterungsteils 3 ausgebildet, welche einteilig mit dem Halterungsteil ausgeführt sind. Die Wandungen 12a, 12b verlaufen gegenüber der Ebene des Wellenaufnahmeabschnittes 9 bzw. des Verbindungsabschnittes 11 senkrecht und erstrecken sich sowohl über den Übergangsabschnitt 10 als auch über eine Teillänge des Wellenaufnahmeabschnittes 9. Über ihre Länge gesehen weisen die Wandungen 12a, 12b verschiedene Abschnitte auf, die der Kontur des Übergangsabschnittes 10 bzw. des Wellenaufnahmeabschnittes 9 folgend zueinander winklig bzw. abgerundet ausgeführt sind.

Auch im Ausführungsbeispiel gemäß Fig. 5 ist das Halterungsteil 3 mit seitlichen Wandungen 12a versehen, welche senkrecht gegenüber der Ebene des Wellenaufnahmeabschnittes 9 ausgerichtet sind. Zweckmäßigerweise sind an beiden, gegenüberliegenden Seitenbereichen derartige Wandungen angeordnet. Jede Wandung 12a, die senkrecht zur Ebene des Wellenaufnahmeabschnittes 9 liegt, ist mit einem umgebogenen Kragen 12b versehen, der sich im Bereich der Stirnseite der Wandung 12a erstreckt und nach außen umgebogen ist. Die Wandung 12a einschließlich Kragen 12b ist einteilig mit dem Halterungsteil 3 ausgeführt und erstreckt sich sowohl über die gesamte Länge des Übergangsabschnittes 10 als auch über einen Großteil der Länge des Wellenaufnahmeabschnittes 9.

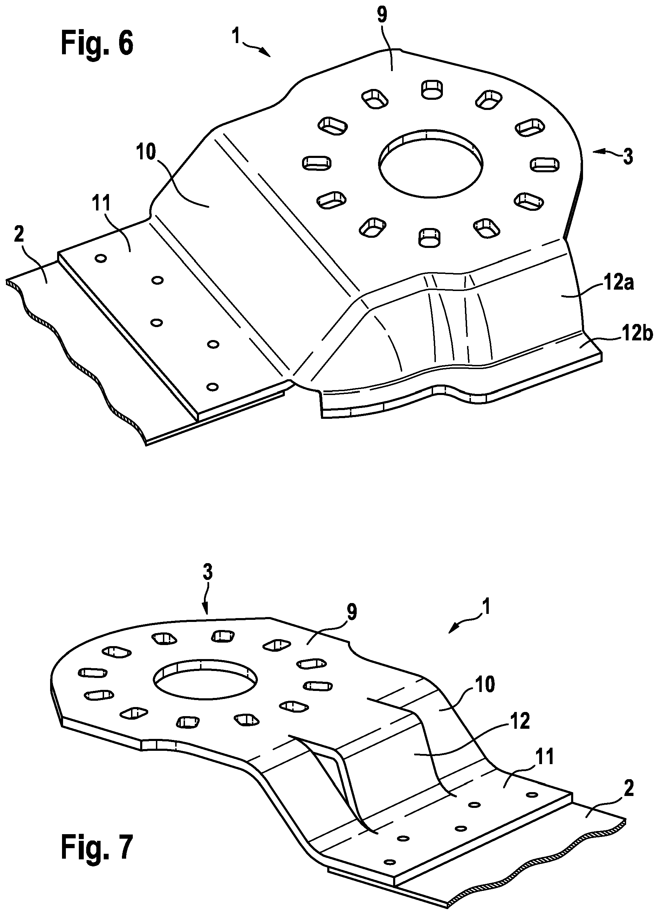

Das Ausführungsbeispiel gemäß Fig. 6 entspricht im Wesentlichen demjenigen nach Fig. 5 und umfasst ebenfalls ein Halterungsteil 3 mit einteilig im Bereich der Seitenkante ausgebildeter Wandung 12a und nach außen umgebogenem Kragen 12b. Allerdings ist die Wandung 12a nicht in einem rechten Winkel zur Ebene des Wellenaufnahmeabschnittes 9 ausgebildet, sondern nimmt einen größeren Winkel als 90° ein und ist dementsprechend unter einem Winkel schräg nach außen geneigt. Die Wandung 12a einschließlich Kragen 12b erstreckt sich über den Übergangsabschnitt 10 sowie über einen Großteil der Länge des Wellenaufnahmeabschnittes 9. Es sind im Bereich beider gegenüberliegenden Seiten derartige Wandungen 12a mit Kragen 12b angeordnet.

Im Ausführungsbeispiel gemäß Fig. 7 ist in den Übergangsabschnitt 10 des Halterungsteils 3 ein nur an seinen Seiten ausgestanztes und erhaben ausgeführtes Verstärkungselement 12 eingebracht, das im Querschnitt winkelförmig ausgebildet ist und mittig in den Übergangsabschnitt 10 mit Abstand zu beiden Seitenkanten eingebracht ist.

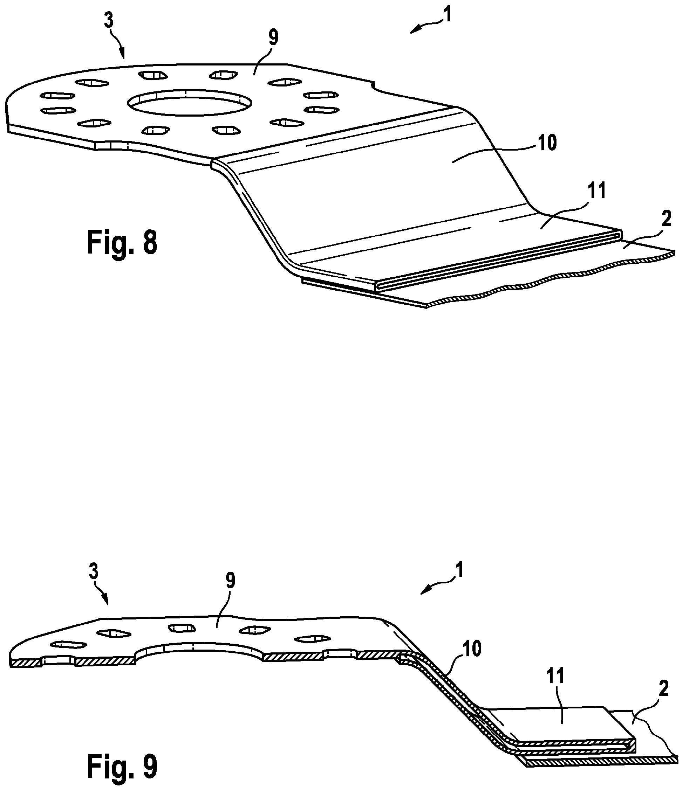

Gemäß Fig. 8 sind der Übergangsabschnitt 10 sowie der Verbindungsabschnitt 11 zum Stammblatt 2 als Hohlprofil ausgebildet, das zur Stirnseite des Verbindungsabschnittes offen ist. Das Hohlprofil ist durch eine obere und eine untere Decklage gebildet, die im Seitenbereich verbunden sind.

Auch im Ausführungsbeispiel gemäß Fig. 9 sind der Übergangsabschnitt 10 und der Verbindungsabschnitt 11 als Hohlprofil ausgeführt, was für eine zusätzliche Steifigkeit sorgt. Das Hohlprofil gemäß Fig. 9 ist zur freien Stirnseite des Verbindungsabschnittes 11 geschlossen ausgeführt.

Gegebenenfalls sind die Abschnitte 9, 10 und/oder 11 jeweils als Hohlprofil bzw. als Rahmenkonstruktion ausgebildet.

Alternativ oder ergänzend zu den in den im Vorhergehenden beschriebenen Ausführungsbeispielen eines erfindungsgemäßen Oszillationstrennwerkzeugs können die am Halterungsteil 3 vorgesehenen Verstärkungselemente 12, 12a, 12b auch als eine in den Figuren nicht dargestellte Härtemodulationszone ausgebildet sein oder eine derartige Härtemodulationszone umfassen.

## Patentansprüche

1. Drehoszillationstrennwerkzeug, insbesondere Drehoszillationssägeblatt, für eine Werkzeugmaschine, insbesondere für eine Handwerkzeugmaschine, mit einem Stammblatt (2), das eine Schneidkante (4) aufweist, und mit einem mit dem Stammblatt (2) fest verbundenen Halterungsteil (3) zur Halterung an einer Welle der Werkzeugmaschine, wobei das Halterungsteil (3) gekröpft ist, **dadurch gekennzeichnet dass** das Halterungsteil zur Steifigkeitsverbesserung mit einem einteilig ausgebildeten Verstärkungselement (12) versehen ist, das benachbart zum Stammblatt (2) angeordnet ist, wobei das Verstärkungselement (12) einteilig mit dem Halterungsteil (3) ausgebildet ist.

2. Drehoszillationstrennwerkzeug nach Anspruch 1, **dadurch gekennzeichnet, dass** das Verstärkungselement (12) als Verformung, beispielsweise als Prägung im Halterungsteil (3) ausgebildet ist.

3. Drehoszillationstrennwerkzeug nach Anspruch 1 oder 2, **dadurch gekennzeichnet, dass** Verstärkungselement (12) als eine Härtemodulationszone im Halterungsteil (3) ausgebildet ist, die mindestens zwei zu einander benachbarte Teilbereiche mit von einander unterschiedlichen Härtegraden im Halterungsteil (3) aufweist.

4. Drehoszillationstrennwerkzeug nach mindestens einem der Ansprüche 1 bis 3, **dadurch gekennzeichnet, dass** mindestens zwei Verstärkungselemente (12) in das Halterungsteil (3) eingebracht sind.

5. Drehoszillationstrennwerkzeug nach einem der Ansprüche 1 bis 4, **dadurch gekennzeichnet, dass** das Verstärkungselement (12) in einem schräg verlaufenden Übergangsabschnitt (10) zwischen einem Wellenaufnahmeabschnitt (9) und einem parallel versetzten Verbindungsabschnitt (11) angeordnet ist, über den das Halterungsteil (3) mit dem Stammblatt (2) verbunden ist.

6. Drehoszillationstrennwerkzeug nach Anspruch 5, **dadurch gekennzeichnet, dass** der schräg verlaufende Übergangsabschnitt (10) verschiedene Bereiche mit unterschiedlichen Winkelneigungen aufweist.

7. Drehoszillationstrennwerkzeug nach Anspruch 5 oder 6, **dadurch gekennzeichnet, dass** das Verstärkungselement (12) sich über die Länge des Übergangsabschnitts (10) zwischen dem Wellenaufnahmeabschnitt (9) und dem Verbindungsabschnitt (11) erstreckt.

8. Drehoszillationstrennwerkzeug nach einem der Ansprüche 5 bis 7, **dadurch gekennzeichnet, dass** der Übergangsabschnitt (10) separat von dem Wellenaufnahmeabschnitt (9) und dem Verbindungsabschnitt (11) ausgebildet und durch mechanische, thermische, chemische Verbindung mit dem Wellenaufnahmeabschnitt (9) bzw. dem Verbindungsabschnitt (11) zusammengefügt ist.

9. Drehoszillationstrennwerkzeug nach einem der Ansprüche 1 bis 8, **dadurch gekennzeichnet, dass** das Verstärkungselement (12) als eine zur Ebene des Halterungsteils (3) winklig ausgerichtete Wandung ausgebildet ist, insbesondere in einem 90°-Winkel oder in einem Winkel größer als 90°.

10. Drehoszillationstrennwerkzeug nach Anspruch 9, **dadurch gekennzeichnet, dass** an der Stirnseite der Wandung ein umgebogener Kragen angeordnet ist.

11. Drehoszillationstrennwerkzeug nach einem der Ansprüche 1 bis 10, **dadurch gekennzeichnet, dass** das Halterungsteil (3) zumindest abschnittsweise als Hohlprofil ausgebildet ist.

12. Drehoszillationstrennwerkzeug nach einem der Ansprüche 1 bis 11, **dadurch gekennzeichnet, dass** das Halterungsteil (3) ein eigenständiges, separat vom Stammblatt (2) ausgeführtes Bauteil bildet, das mit dem Stammblatt (2) verbunden ist.

13. Drehoszillationstrennwerkzeug nach einem der Ansprüche 1 bis 12, **dadurch gekennzeichnet, dass** das Verstärkungselement (12) als separates Teil ausgebildet, das durch mechanische, thermische und/oder chemische Verbindung mit dem Halterungsteil (3) zusammengefügt oder verstärkt ist.

14. Werkzeugmaschine, insbesondere Handwerkzeugmaschine mit einem Drehoszillationstrennwerkzeug (1) nach einem der Ansprüche 1 bis 13.

15. Drehoszillationstrennwerkzeug nach einem der Ansprüche 1 bis 13, **dadurch gekennzeichnet, dass** das Verstärkungselement (12) in einem mittleren Bereich des Halterungsteils (3), vorzugsweise mit seitlichem Abstand zu den Seitenkanten, angeordnet ist.

16. Drehoszillationstrennwerkzeug nach einem der Ansprüche 1 bis 13 und/oder nach Anspruch 15, **dadurch gekennzeichnet, dass** das Halterungsteil (3) einen Wellenaufnahmeabschnitt (9), einen den Wellenabschnitt (9) und den Verbindungsabschnitt (11) verbindenden Übergangsabschnitt (10) sowie einen Verbindungsabschnitt (11) umfasst, wobei das Verstärkungselement (12) in dem Übergangsabschnitt (10) eingebracht ist.

## Claims

1. Rotary oscillating cutting tool, in particular rotary oscillating saw blade, for a power tool, in particular for a portable power tool, having a blade body (2) which has a cutting edge (4), and having a mount part (3), firmly connected to the blade body (2), for mounting on a shaft of the power tool, wherein the mount part (3) is cranked, **characterized in that**, in order to improve rigidity, the mount part is provided with an integrally formed reinforcing element (12) which is arranged next to the blade body (2), wherein the reinforcing element (12) is formed integrally with the mount part (3).

2. Rotary oscillating cutting tool according to Claim 1, **characterized in that** the reinforcing element (12) is configured as a deformation, for example as an impression in the mount part (3).

3. Rotary oscillating cutting tool according to Claim 1 or 2, **characterized in that** the reinforcing element (12) is configured as a hardness modulation zone in the mount part (3), said hardness modulation zone having at least two mutually adjacent subregions having different degrees of hardness in the mount part (3).

4. Rotary oscillating cutting tool according to at least one of Claims 1 to 3, **characterized in that** at least two reinforcing elements (12) have been introduced into the mount part (3).

5. Rotary oscillating cutting tool according to one of Claims 1 to 4, **characterized in that** the reinforcing element (12) is arranged in an obliquely extending transition portion (10) between a shaft receiving portion (9) and a connecting portion (11), offset in parallel, via which the mount part (3) is connected to the blade body (2).

6. Rotary oscillating cutting tool according to Claim 5, **characterized in that** the obliquely extending transition portion (10) has different regions with differing angular inclinations.

7. Rotary oscillating cutting tool according to Claim 5 or 6, **characterized in that** the reinforcing element (12) extends along the length of the transition portion (10) between the shaft receiving portion (9) and the connecting portion (11) .

8. Rotary oscillating cutting tool according to one of Claims 5 to 7, **characterized in that** the transition portion (10) is formed separately from the shaft receiving portion (9) and the connecting portion (11) and is joined to the shaft receiving portion (9) and the connecting portion (11) by mechanical, thermal, chemical connection.

9. Rotary oscillating cutting tool according to one of Claims 1 to 8, **characterized in that** the reinforcing element (12) is configured as a wall oriented at an angle to the plane of the mount part (3), in particular at a 90° angle or at an angle greater than 90°.

10. Rotary oscillating cutting tool according to Claim 9, **characterized in that** a bent collar is arranged on the end side of the wall.

11. Rotary oscillating cutting tool according to one of Claims 1 to 10, **characterized in that** the mount part (3) is configured at least partially as a hollow profile.

12. Rotary oscillating cutting tool according to one of Claims 1 to 11, **characterized in that** the mount part (3) forms an independent component which is formed separately from the blade body (2) and is connected to the blade body (2).

13. Rotary oscillating cutting tool according to one of Claims 1 to 12, **characterized in that** the reinforcing element (12) is configured as a separate part which is reinforced or joined to the mount part (3) by mechanical, thermal and/or chemical connection.

14. Power tool, in particular portable power tool having a rotary oscillating cutting tool (1) according to one of Claims 1 to 13.

15. Rotary oscillating cutting tool according to one of Claims 1 to 13, **characterized in that** the reinforcing element (12) is arranged in a central region of the mount part (3), preferably at a lateral spacing from the side edges.

16. Rotary oscillating cutting tool according to one of Claims 1 to 13 and/or according to Claim 15, **characterized in that** the mount part (3) comprises a shaft receiving portion (9), a transition portion (10) connecting the shaft portion (9) and the connecting portion (11), and a connecting portion (11), wherein the reinforcing element (12) has been introduced into the transition portion (10) .

## Revendications

1. Outil de coupe oscillant-rotatif, en particulier lame de scie oscillante-rotative, pour une machine-outil, en particulier pour une machine-outil portable, avec un corps de lame (2) qui présente une arête de coupe (4), et avec une partie de support (3) fixée au corps de lame (2) pour le support sur un arbre de la machine-outil, dans lequel la partie de support (3) est contrecoudée, **caractérisé en ce que** la partie de support est munie, pour l'amélioration de la rigidité, d'un élément de renforcement (12) réalisé d'une seule pièce, qui est disposé à proximité du corps de lame (2), dans lequel l'élément de renforcement (12) est réalisé d'une seule pièce avec la partie de support (3) .

2. Outil de coupe oscillant-rotatif selon la revendication 1, **caractérisé en ce que** l'élément de renforcement (12) est réalisé sous la forme d'une déformation, par exemple sous la forme d'un estampage dans la partie de support (3).

3. Outil de coupe oscillant-rotatif selon la revendication 1 ou 2, **caractérisé en ce que** l'élément de renforcement (12) est réalisé sous la forme d'une zone de modulation de la dureté dans la partie de support (3), qui présente au moins deux régions partielles proches l'une de l'autre avec des niveaux de dureté différents l'un de l'autre dans la partie de support (3).

4. Outil de coupe oscillant-rotatif selon au moins une des revendications 1 à 3, **caractérisé en ce qu'**au moins deux éléments de renforcement (12) sont pratiqués dans la partie de support (3).

5. Outil de coupe oscillant-rotatif selon l'une quelconque des revendications 1 à 4, **caractérisé en ce que** l'élément de renforcement (12) est disposé dans une partie de transition disposée en oblique (10) entre une partie de réception d'arbre (9) et une partie d'assemblage décalée parallèlement (11), par laquelle la partie de support (3) est assemblée au corps de lame (2) .

6. Outil de coupe oscillant-rotatif selon la revendication 5, **caractérisé en ce que** la partie de transition disposée en oblique (10) présente différentes régions avec des inclinaisons angulaires différentes.

7. Outil de coupe oscillant-rotatif selon la revendication 5 ou 6, **caractérisé en ce que** l'élément de renforcement (12) s'étend sur la longueur de la partie de transition (10) entre la partie de réception d'arbre (9) et la partie d'assemblage (11).

8. Outil de coupe oscillant-rotatif selon l'une quelconque des revendications 5 à 7, **caractérisé en ce que** la partie de transition (10) est formée séparément de la partie de réception d'arbre (9) et de la partie d'assemblage (11) et est jointe à la partie de réception d'arbre (9) ou à la partie d'assemblage (11) par un assemblage mécanique, thermique ou chimique.

9. Outil de coupe oscillant-rotatif selon l'une quelconque des revendications 1 à 8, **caractérisé en ce que** l'élément de renforcement (12) est réalisé sous la forme d'une paroi orientée en oblique par rapport au plan de la partie de support (3), en particulier avec un angle de 90° ou avec un angle supérieur à 90°.

10. Outil de coupe oscillant-rotatif selon la revendication 9, **caractérisé en ce qu'**un rebord replié est disposé sur le côté frontal de la paroi.

11. Outil de coupe oscillant-rotatif selon l'une quelconque des revendications 1 à 10, **caractérisé en ce que** la partie de support (3) est réalisée au moins localement sous la forme d'un profilé creux.

12. Outil de coupe oscillant-rotatif selon l'une quelconque des revendications 1 à 11, **caractérisé en ce que** la partie de support (3) forme un composant autonome, réalisé séparément du corps de lame (2), qui est assemblé au corps de lame (2).

13. Outil de coupe oscillant-rotatif selon l'une quelconque des revendications 1 à 12, **caractérisé en ce que** l'élément de renforcement (12) est réalisé sous la forme d'une pièce séparée, qui est jointe à la partie de support (3) ou renforcée par un assemblage mécanique, thermique et/ou chimique.

14. Machine-outil, en particulier machine-outil portable, avec un outil de coupe oscillant-rotatif (1) selon l'une quelconque des revendications 1 à 13.

15. Outil de coupe oscillant-rotatif selon l'une quelconque des revendications 1 à 13, **caractérisé en ce que** l'élément de renforcement (12) est disposé dans une région centrale de la partie de support (3), de préférence avec une distance latérale des arêtes latérales.

16. Outil de coupe oscillant-rotatif selon l'une quelconque des revendications 1 à 13 et/ou selon la revendication 15, **caractérisé en ce que** la partie de support (3) comprend une partie de réception d'arbre (9), une partie de transition (10) reliant la partie de réception d'arbre (9) et la partie d'assemblage (11) ainsi qu'une partie d'assemblage (11), dans lequel l'élément de renforcement (12) est pratiqué dans la partie de transition (10).
